# EUROPEAN PATENT APPLICATION

(11) **EP 0 791 503 A2**
(43) Date of publication of application: **27.08.1997**
(21) Application number: 97107166.7
(22) Date of filing: 11.12.1995
(51) Int. Cl.: B60R 1/08

(54) **Improved rearview mirror for motor vehicles**

(30) Priority: 02.03.1995 US 399152
(62) Divisional of application: 95308981.0
(71) Applicant: GENTEX CORPORATION, Zeeland, Michigan 49464 (US)
(72) Inventor: Bauer, Frederick T., Zeeland, Michigan 49464 (US); Tonar, William L., Zeeland, Michigan 49464 (US); Byker, Harlan J., Zeeland, Michigan 49464 (US); Cammenga, David J., Zeeland, Michigan 49464 (US)
(74) Representative: Leeming, John Gerard

(57) **Abstract**

An improved low cost automatic rearview mirror for automotive vehicles is provided, the mirror being capable of operating in harsh environments over wide variations in temperature, humidity, vibration, atmospheric corrosion, salt spray, electronic disturbances and sand and grit abrasion. In one embodiment of the invention, an improved automatically partially dimming aspheric outside rearview mirror is provided which increases the safety of night driving and in which an inboard portion of the mirror automatically transfers from a full reflective mode to a partial reflective mode for glare protection purposes while an outboard portion of the mirror remains in the full reflectance mode at all times so as to provide a danger signal. Another embodiment of the invention provides improved signaling means.

## Description

### BRIEF SUMMARY OF THE INVENTION

This invention relates to rearview mirrors for motor vehicles and, more particularly, to improved exterior rear view mirrors for motor vehicles.

Heretofore, various automatic rearview mirrors for motor vehicles have been devised which automatically change from the full reflectance mode (day) to the partial reflectance mode (night) for glare protection purposes from light emanating from the headlights of vehicles approaching from the rear. The electrochromic mirrors disclosed in U.S. Patent No. 4,902,108, issued February 20, 1990, for Single-Compartment, Self-Erasing, Solution-Phase Electrochromic Devices, Solutions for Use Therein, and Uses Thereof; U.S. Patent No. 4,917,477, issued April 17, 1990, for Automatic Rearview Mirror System for Automotive Vehicles; U.S. Patent No. 5,128,799, issued July 7, 1992, for Variable Reflectance Motor Vehicle Mirror; U.S. Patent No. 5,202,787, issued April 13, 1993, for Electro-Optic Device; U.S. Patent No. 5,280,380, issued January 18, 1994, for UV-Stabilized Compositions and Methods; and U.S. Patent No. 5,282,077, issued January 25, 1994, for Variable Reflectance Mirror, each of which patents is assigned to the assignee of the present invention, are typical of modern day automatic rearview mirrors for motor vehicles. Such electrochromic mirrors may be utilized in a fully integrated inside/outside rearview mirror system or as an inside or an outside rearview mirror system. In general, in automatic rearview mirrors of the types disclosed in U.S. Patent Nos. 4,902,108; 4,917,477; 5,128,799; 5,202,787, 5,280,380 and 5,282,077, both the inside and the outside rearview mirrors are comprised of a relatively thin electro-optic medium sandwiched and sealed between two glass elements. In most cases when the electro-optic medium is electrically energized, it darkens and begins to absorb light, and the higher the voltage, the darker the mirror becomes. When the electrical voltage is decreased to zero or removed, the mirror returns to its clear state. Also, in general, the electro-optic medium sandwiched and sealed between the two glass elements is preferably comprised of solutions of electrochromic compounds which function as the media of variable transmittance in the mirrors, although it should be understood that other electro-optic media may be utilized, including an approach wherein a tungsten oxide electrochromic layer is coated on one electrode with a solution containing at least another compound to provide counter electrode reaction. When operated automatically, the rearview mirrors of the indicated character generally incorporate light-sensing electronic circuitry which is effective to change the mirrors to the dimmed reflectance modes when glare is detected, the sandwiched electro-optic medium being activated and the mirror being dimmed in proportion to the amount of glare that is detected. As glare subsides, the mirror automatically returns to its normal high reflectance state without any action being required on the part of the driver of the vehicle. The electro-optic medium is disposed in a sealed chamber defined by a transparent front glass element, a peripheral edge seal, and a rear mirror element having a reflective layer, the electro-optic medium filling the chamber. Conductive layers are provided on the inside of the front and rear glass elements, the conductive layer on the front glass element being transparent while the conductive layer on the rear glass element may be either transparent or opaque, i.e., the conductive layer on the rear glass element may also function as the reflective layer for the rear glass element, and the conductive layers on both the front glass element and the rear glass element are connected to electronic circuitry which is effective to electrically energize the electro-optic medium to switch the mirror to nighttime, decreased reflectance modes when glare is detected and thereafter allow the mirror to return to the daytime, high reflectance mode when the glare subsides as described in detail in the aforementioned U.S. Patents. For clarity of description of such a structure, the front surface of the front glass element is sometimes referred to hereinafter as the first surface, and the inside surface of the front glass element is sometimes referred to as the second surface. The inside surface of the rear glass element is sometimes referred to as the third surface, and the back surface of the rear glass element is sometimes referred to as the fourth surface.

If desired, and as described in detail in the applicants' copending application entitled "Dimmable Rearview Mirror for Motor Vehicles", which application is assigned to the assignee of the present invention, and the entire disclosure of which is hereby incorporated by reference, a reflective layer may be provided on the inside (third surface) of the back glass of a dimming portion of the rearview mirror, which layer is comprised of a series of coatings, hereafter called the multilayer combination reflector/electrode, which also forms an integral electrode in contact with the electrochromic media. The other electrode on the inside (second) surface of the front glass is a transparent electrode which also contacts the electrochromic media inside the mirror element. The series of coatings of the multilayer combination reflector/ electrode is comprised of at least a base coating which bonds to the glass surface tenaciously and resists the corrosive action of the materials in the electrochromic media, and a reflective over coating which directly contacts the electrochromic media and which is chosen primarily for its high reflectance, stable behavior as an electrode, resistance to corrosion by the materials of the electrochromic media, resistance to atmospheric corrosion, resistance to electrical contact corrosion, the ability to adhere to the base coating, and ease of cleaning to an uncontaminated, high quality electrode surface. The series of coatings of the multilayer combination reflector/electrode has one or more base coatings and one or more high reflectance over coatings. The transparent coating is preferably fluorine doped tin oxide, tin doped indium oxide (ITO) or a series of metal oxide coatings with base coatings to suppress color and reflection followed by an electrically conductive, transparent coating which contacts the electrochromic media directly. Where a series of transparent coatings is used, the materials are chosen for good bonding, resistance to corrosion by the materials of the electrochromic media, resistance to corrosion by the atmosphere, minimal reflectance, high light transmission, neutral coloration and high electrical conductance. Also, to a considerable extent, it is possible to make the reflective electrode very high in electrical conductance to compensate in a synergistic fashion with a transparent electrode that is lower in electrical conductance so the net result is an electrochromic mirror which darkens and clears acceptably fast and uniformly with excellent optical properties.

This synergistic structure is applicable for both inside and outside rearview mirrors for motor vehicles. When the multilayer combination reflector/electrode is used in any mirror, it has the inherent advantage of reducing double images, distortion, and multiple images from raindrops, dust, etc., while providing excellent speed of reflectance change, good high end reflectance, good uniformity of reflectance change across the surface area of the mirror, neutral color, continually variable reflectance and a low end reflectance low enough to relieve strong glare. The reduction in double images and distortion is particularly useful in the case of dimmable mirrors which use glass that is bent but may have slight variations in radius of curvature or slight ripple or warp that result in slight imperfections in matching two pieces of bent glass required to make, for example, a convex electrochromic mirror.

Heretofore, non-automatically dimming aspheric exterior rearview mirrors have been provided which increase the field of view of the driver of a vehicle and virtually eliminate the well-known blind spots of conventional flat glass and/or curved glass exterior mirrors. In general, aspheric mirrors are made by using multiple radii of curvature or by combining several types of curvature, i.e., a man flat area (infinite radius of curvature) or a main curved area with a constant radius of curvature similar to the convex mirrors that are currently in common use on passenger side exterior mirrors in the United States, together with an aspheric area which is disposed on the outboard portion of the mirror. It is the high curvature in the aspheric area that yields a greatly expanded field of view which, in general, may be nearly double that of convex mirrors and nearly triple that of flat-surface mirrors. Aspheric mirrors thus tend to eliminate the conventional so-called blind spots, thereby enabling the drivers of the vehicles to see adjacent lanes in the road and to change lanes without failing to observe other vehicles, such as automobiles, motorcycles and bicycles, traveling in adjacent lanes. However, serious cost and technical problems arise when efforts are made to construct an automatically dimming aspheric outside rearview mirror with a reflective layer on the back (fourth) surface of the rear glass element, because it is generally necessary to very closely match the curvature of two glass elements of complex curvature, sometimes referred to as "matched-twins" in the industry. Mismatched glass elements can cause double images, and at the present time, it is questionable whether automatically dimming, double image-free aspherical mirrors having a reflective layer on the fourth surface of the mirror element can be commercially manufactured from a practical and/or economical standpoint. However, unexpected and surprisingly good results are obtained when a multilayer combination reflector/electrode is utilized on the inside (third surface) of an aspheric portion of a dimmable rearview mirror constructed in accordance with the present invention.

Heretofore, the benefits of including a turn signal or other signal, such as a brake signal, in each of the outside mirrors of an automotive vehicle have been recognized. U.S. Patent No. 5,014,167, issued May 7, 1991, for Visual Signaling Apparatus, and U.S. Patent No. 5,207,492, issued May 4, 1993, for Mirror Assembly describe such mirrors where signal indicators are located behind the mirror surface. Through the use of dichroic reflectors, special light sources, and directional louver means these signals, such as turn signals, can be hidden from the view of the vehicle operator so that the signals do not cause a vision nuisance while still being visible to following vehicles or to the passing vehicles on either side. The benefit is that vehicles located in the blind spots, yet too far forward to see conventional rear turn signals, receive forewarnings that a vehicle is about to turn. These mirrors have come to be known as "signal mirrors" in the industry. Heretofore, signal mirrors have not been particularly successful commercially due to cost, technical problems, and the inherent difficulty of combining this feature with automatic dimming mirrors.

An aim of the present invention is to overcome the serious cost and technical problems encountered in efforts to very closely match the complex curvatures of multiple glass plates for use in an automatically dimming aspheric outside rearview mirror of the indicated character, and to provide an improved automatically partially dimming aspheric outside rearview mirror incorporating improved means which enables the mirror to be commercially and economically manufactured and assembled from a practical standpoint.

Another aim of the present invention is to provide an improved dimmable rearview mirror which increases the safety of night driving.

Another aim of the present invention is to provide an improved aspheric outside rearview mirror for motor vehicles in which an inboard portion of the mirror can be varied from its high reflectance mode to partial or lower reflectance modes for glare protection purposes while an outboard portion of the mirror remains in the high reflectance mode at all times so as to provide a potential danger/warning signal if another vehicle is nearby in adjacent lanes even under glare-producing conditions.

Another aim of the present invention is to provide an improved dimmable rearview mirror for motor vehicles which provides a greater field of view than conventional flat or convex dimming outside rearview mirrors.

Another aim of the present invention is to provide an improved electro-optic, dimmable rearview mirror for motor vehicles, which mirror is relatively economical to manufacture and assemble, durable, efficient and reliable in operation.

Another aim of the present invention is to provide improved signaling means in conjunction with an improved outside rearview mirror for motor vehicles.

Still another aim of the present invention is to provide improved signaling means at the outboard section of a partially dimming mirror whereby technical difficulties are eliminated and costs are reduced.

Yet another aim of the present invention is to provide an improved dimmable rearview mirror for motor vehicles in which double images, distortion and multiple images from raindrops are reduced and wherein excellent speed of reflectance change, good high end reflectance, good uniformity of reflectance change across the surface area of the mirror, neutral color, continually variable reflectance and good low end reflectance are obtained.

The above features and advantages of the present invention will be further described hereinafter in the following description of exemplary embodiments and the accompanying drawings, in which:
FIG. 1 is a front elevational view schematically illustrating an inside/outside rearview mirror system for motor vehicles, the system including a dimmable inside rearview mirror together with two dimmable outside rearview mirrors which embody the present invention and all of which are adapted to be installed on a motor vehicle in a conventional manner whereby the mirrors face the rear of the vehicle and can be viewed by the driver of the vehicle to provide a rearward view to the driver;
FIG. 2 is an enlarged simplified sectional view of the inside rearview mirror illustrated in FIG. 1, taken on the line 2-2 thereof;
FIG. 3 is an exploded view of the left electro-optic, aspheric, partially dimmable outside rearview mirror illustrated in FIG. 1;
FIG. 4 is a front elevational view of the mirror illustrated in FIG. 3;
FIG. 5 is a simplified top plan view of the mirror illustrated in FIG. 4;
FIG. 6 is a simplified side elevational view of the right side of the mirror as viewed in FIG. 4, showing the electro-optic structure.
FIG. 7 is a schematic simplified side elevational view of another embodiment of the invention;
FIG. 8 is a schematic simplified side elevational view of still another embodiment of the invention; and
FIG. 9 is a schematic simplified top plan view of yet another embodiment of the invention.

### DETAILED DESCRIPTION

In general, in outside rearview mirrors embodying the present invention, at least a portion of the rearview mirror assembly may be comprised of a relatively thin layer of an electro-optic medium sealed between two glass elements. When the electro-optic medium is electrically energized, it darkens and begins to absorb light, and the higher the voltage, the darker the mirror becomes. When the electrical voltage is decreased to zero or is removed, the electro-optic medium returns to its clear state. Rearview mirrors embodying the present invention may, for example, incorporate light-sensing electronic circuitry of the type illustrated and described in the aforementioned U.S. Patent No. 4,917,477. Also, the components of mirrors embodying the present invention may be of the types disclosed in the aforementioned U.S. Patent Nos. 4,902,108; 5,128,799; 5,202,787; 5,280,380 and 5,282,077, as well as in U.S. Patent No. 5,014,167, issued May 7, 1991, for Visual Signaling Apparatus, and U.S. Patent No. 5,207,492, issued May 4, 1993, for Mirror Assembly. It should be understood, however, that other type of electronic circuitry and other types of electro-optic media and other components may be utilized in minors embodying the present invention.

In one embodiment of the present invention, an aspheric outside rearview mirror is provided wherein a large flat area and/or a large radius of curvature convex area of the mirror automatically dims, but the aspheric portion of the mirror does not. A key aspect of such embodiment of the invention resides in the fact that the front glass element is formed in one continuous piece that includes an inboard main body portion that is substantially flat, or slightly curved, and an outboard aspherical portion which is formed integrally with the main body portion and projects laterally outwardly therefrom. In its most practical form, the outside mirror has a large radius of curvature, spherical, convex inboard portion, integrally joined to an outboard aspherical portion, it being understood, however, that the dimming inboard portion could be of flat or other configuration, and that the aspherical portion could be of cylindrical or spherical configuration or could be formed with multiple radii of curvature or other configurations.

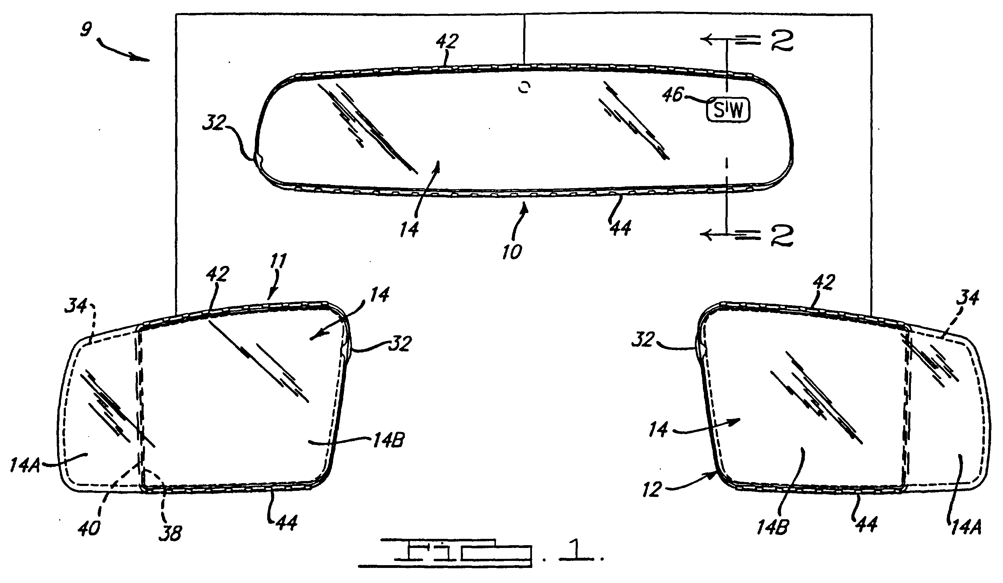

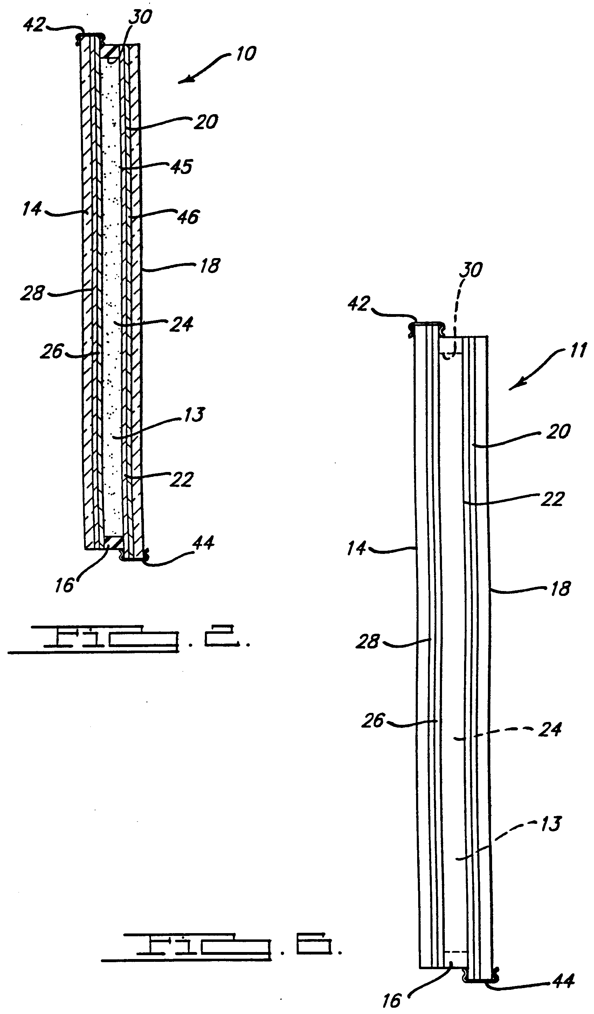

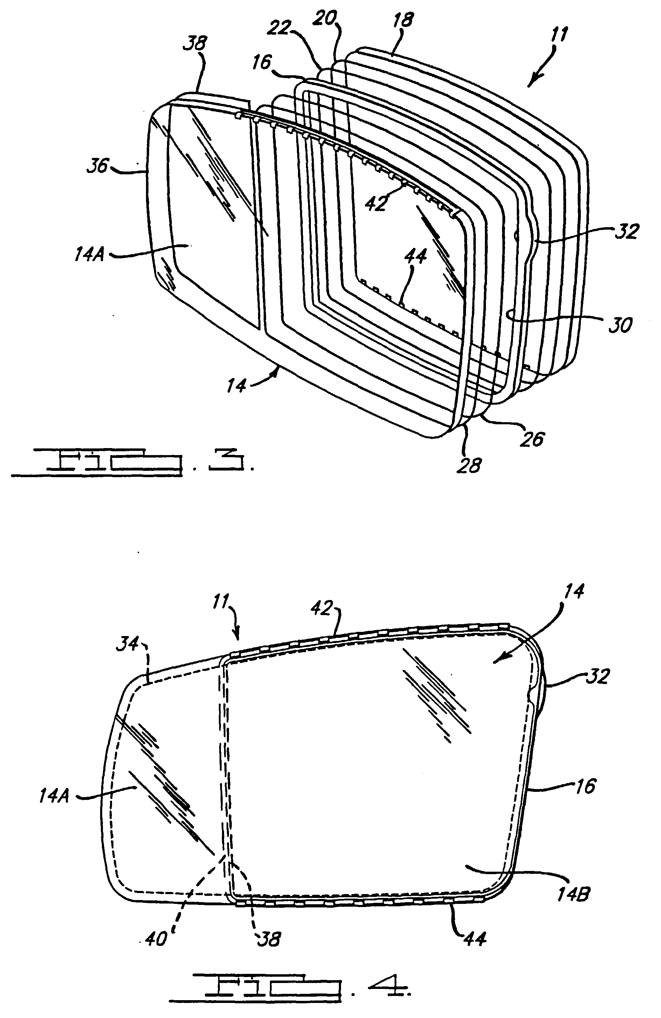

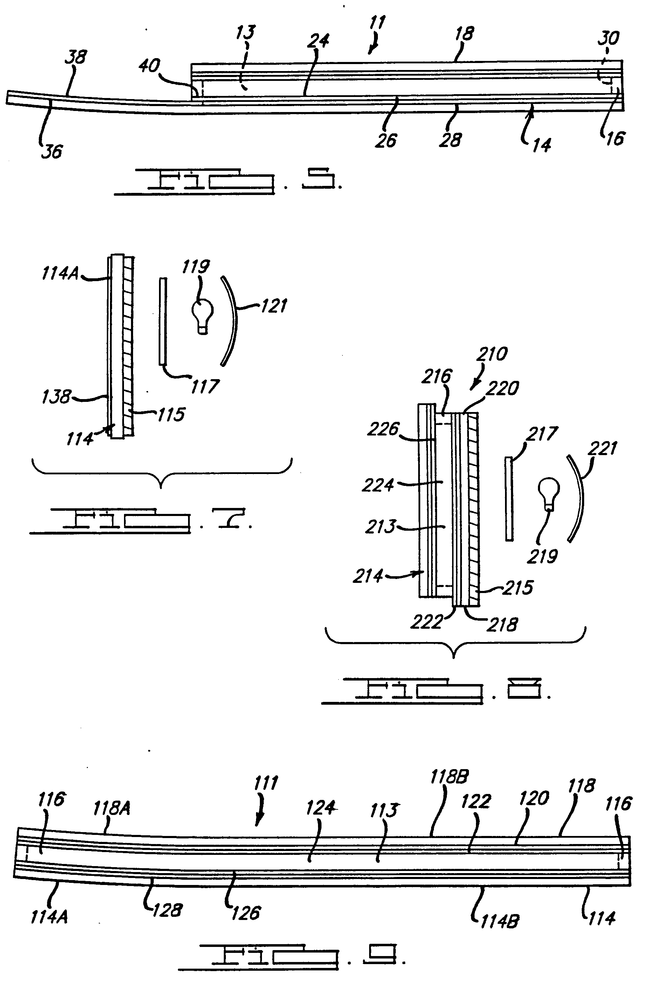

Referring to the drawings, an electro-optic inside/outside mirror assembly, generally designated 9, embodying the present invention is depicted in FIGS. 1 through 6. Since some of the layers of each of the mirrors in the assembly 9 are very thin, the scale has been distorted for pictorial clarity. As shown in the drawings, the mirror assembly 9 includes a inside mirror 10 and outside mirrors 11 and 12. For clarity, in the drawings, like numbers identify components of the inside and outside minors which may be slightly different in configuration but which function in substantially the same manner and obtain the same results as similarly numbered components. For example, the shape of the front glass element of the left outside mirror is the reverse of the shape of the right outside mirror, and the front glass element of the inside mirror is generally longer and narrower than the front glass elements of the outside mirrors. In the embodiment of the illustrated, each of the mirrors 10, 11 and 12 includes a sealed chamber 13, defined by a front glass element 14, an edge seal 16, and a rear glass element 18, having reflective and electrically conductive metal layers 20 and 22, respectively. An electro-optic medium 24 having the desired electro-optic properties fills the chamber 13, and a transparent electrically conductive layer such as a fluorine-doped tin oxide conductive layer 26 is carried by the front element 14. The electrically conductive layers are connected to an electrical circuit as will be described hereinafter in greater detail. If desired, a color suppression coating or coatings, such as 28, may be disposed between the conductive layer 26 and the adjacent rear surface of the front element 14. Light rays enter through the front glass element 14, the color suppression coating(s) 28, the transparent conductive layer 26 and the electro-optic medium 24 before being reflected from the electrically conductive and reflective layer 22 (or layers 20 and 22 if layer 22 is extremely thin) provided on the rear glass element 18. The reflected rays exit by the same general path traversed in the reverse direction. In electrochromic media both the entering rays and the reflected rays are attenuated in proportion to the degree to which the electro-optic medium 24 is light-absorbing while in other electro-optic media the light rays may, in some cases, only be attenuated in one direction. When the electro-optic medium 24 is electrochromic and highly light absorbing, the intensity of the exiting rays is diminished, the dim image remaining mainly being from light rays which are reflected off of the front surface of the front glass element 14 and the interface between the front glass element 14 and the coatings 28 and/or 26. Thus, the basic structural elements of the electro-optic portion of each of the mirrors includes two electrode-bearing sides or walls 14 and 18, a spacing or separating seal 16, which spaces apart and holds the walls in substantially parallel relationship in an assembled device, and which surrounds a volume which in an assembled device is defined by the inside surfaces of electrode layers on the electrode-bearing walls as well as the circumferential inside walls 30 of the sealing member 16. The volume of the chamber 13 is preferably filled through a sealable fill port 32 with any of the electro-optic media disclosed in this or the aforementioned patents which have reversibly variable transmittance in the operation of the device, the medium in the chamber 13 being in contact with both electrode layers 22 and 26 during operation of the mirror. It will be understood that the electro-optic medium for achieving variable reflectance could be other solution-phase electrochromics, solid electrochromics, a combination of the two in the form of a hybrid, or any of the above in a polymerized matrix. A liquid crystal, dipolar suspension or other electro-optic medium could also be utilized in mirrors embodying the present invention.

In the embodiment of the invention illustrated, the reflective surface on the inside of the rear glass 18 may be comprised of a series of coatings, hereinafter termed the multilayer combination reflector/electrode, which serves as a mirror reflectance layer and also forms an integral electrode in contact with the electrochromic media. The other electrode on the inside surface of the front glass 14 is the transparent electrode 26 which also contacts the electrochromic media inside the mirror element. The series of multilayer combination reflector/electrode coatings is comprised first of a base coating which bonds to the glass surface tenaciously and resists the corrosive action of the materials in the electrochromic media. The base coating is preferably chromium, but alternatively may be stainless steel, nickel-chromium, titanium, gold, silver, or any material or series of coatings which accomplish the objectives above stated. The thickness of the base coating is typically 100 to 1500 angstroms and is more typically 200 to 800 angstroms. The final reflective coating which directly contacts the electrochromic media is chosen primarily for its high reflectance, resistance to attack by the electrochromic media, resistance to atmospheric corrosion, resistance to electrical contact corrosion, and the ability to adhere to the base coating. The preferred material for the reflective coating is rhodium which has excellent hardness, excellent reflectance and excellent conductance, but it should be understood that it is alternatively possible to choose from a group of metals and their alloys such as, but not limited to, platinum, ruthenium, iridium, and stainless steel or multiple layers including combinations thereof. The thickness of the reflective over coating is typically 100 to 1000 angstroms and is more typically 100 to 600 angstroms. The series of coatings of this multilayer combination reflector/electrode has one or more base coating(s) which generally provide high conductance and one or more over coatings which provide additional conductance and high reflectance. By way of example the sheet resistance of the multilayer combination reflector/electrode may be approximately 1 to 10 ohms per square.

The transparent coating 26 is preferably made of fluorine doped tin oxide or ITO or alternately a series of coatings with a base coating(s) to suppress color and reflection followed by a conductive transparent coating which contacts the electrochromic media directly. Where a series of transparent coatings is used, the materials are chosen for good bonding, good resistance to corrosion by the materials in the electrochromic media, good resistance to corrosion by the atmosphere, minimal reflectance, high light transmission, neutral coloration and high electrical conductance. Suitable types of low cost transparent electrode coated glass substrates are "TEK 20" or "TEK 15" coated glass manufactured by Libbey Owens-Ford of Toledo, Ohio, but other suitable coatings are ITO or extremely thin metal layers which may alternatively function as the transparent electrode.

Transparent electrode materials are inherently limited in the balance of properties and cost. Low sheet resistance transparent coatings with a sheet resistance below approximately 10 ohms per square tend to have low transmission and other attendant shortcomings including possible haziness, coloration, non-uniformity of coating thickness and high cost. This makes a low sheet resistance transparent coating less practical for electrochromic mirrors. To a considerable extent, it is possible to make the multilayer combination reflector/electrode low in electrical resistance to compensate in a synergistic fashion with a transparent electrode that is higher in electrical resistance so the net result is an electrochromic mirror which darkens and clears acceptably fast and uniformly over its surface area, with excellent optical properties.

To demonstrate the surprising nature of the synergy, electrochromic mirrors have been constructed with a multilayer combination reflector/electrode of about 3 and of about 7 ohms per square sheet resistance with a front transparent electrode of about 18 to 22 ohms per square or higher which show remarkably good results for speed and uniformity of coloration and clearing. Electrochromic mirrors with reflectors on the front surface of the rear element have been previously described, but the use of multilayer coatings that combine to provide high reflectance, good adhesion to glass, low sheet resistance and ease of cleaning for electrochromic mirrors, especially in combination with a low cost high resistance transparent coating, is preferred. Thus, if desired, mirrors embodying the present invention may use a high electrical conductance multilayer combination reflector/electrode on the third surface, with a lower electrical conductance transparent front electrode on the second surface to achieve a cost effective, high performance, electrochromic mirror. This synergistic structure has the inherent advantage of reducing double images, distortion, and multiple images from raindrops, (particularly with convex or spherically curved mirrors), while providing excellent speed of reflectance change, good high end reflectance, good uniformity of reflectance change over the area of the device, neutral color and a low end reflectance, low enough to relieve strong glare.

The following are examples of components that have been found to be suitable for use in rearview mirrors embodying the present invention, it being understood that other components may also be used in rearview mirrors embodying the present invention.

### EXAMPLE 1

A multilayer combination reflector/electrode was prepared by sequentially depositing approximately 300 angstroms of titanium, approximately 200 angstroms of gold and approximately 200 angstroms of platinum on the 6.6 cm by 14.4 cm surface of a 0.2 cm thick sheet of soda lime float glass. The deposition was accomplished by rotating the glass sheet past three separate metal targets in a magnetron sputtering system with a base pressure of a 3 x 10⁻⁶ tort and an argon pressure of 2 x 10⁻³ torr. The first surface, CIE curve white light reflectance from the multilayer combination reflector/electrode with the platinum surface in contact with air, measured according to the procedure of SAE J964, was 71.9 percent and the sheet resistance of the metal layer stack was 3.2 ohms per square.

This multilayer combination reflector/electrode coated glass was used as the rear element of an electrochromic mirror device. The front element was a sheet of TEK 20 transparent conductor coated glass of the same size as the rear element. The sheet resistance of the transparent conductor was approximately 20 ohms per square. The two elements were bonded together by an epoxy perimeter seal with the transparent conductor electrode and multilayer combination reflector/electrode offset from, substantially parallel to and facing each other as shown in Figure 2. The spacing between the electrodes was about 0.014 cm. The device was vacuum filled through a small gap left in the perimeter seal with a solution made up of:
0.034 molar 5,10-dihydro-5,10-dimethylphenazine
0.034 molar 1,1'-di(phenyl propyl)-4,4'-bipyridinium difluoroborate
0.5 molar ethyl-2-cyano-3,3-diphenylacrylate
in a solution of 3 wt% Elvacite™ 2041 polymethylmethacrylate resin dissolved in propylene carbonate.

The small gap was plugged with a UV cure adhesive which was cured by exposure to UV light.

The reflectance of the device, (measured as before for the rear element), with no voltage applied was 56 percent and with 1.2 volts applied the reflectance decreased over a period of 5 seconds to 10 percent and within 10 seconds to 7.5 percent. On short circuiting the device, the reflectance increased over a period of 15 seconds back to 56 percent.

### EXAMPLE 2

Other than as specifically mentioned, the conditions of Example 1 were used in this example. A multilayer combination reflector/electrode was prepared by sequentially depositing approximately 300 angstroms of chromium, approximately 500 angstroms of silver and approximately 300 angstroms of platinum at a base pressure of 3.7 x 10⁻⁶ torr and an argon pressure of 8 x 10⁻³ torr. The first surface reflectance was 73.3 percent and the sheet resistance was 0.1 ohms per square.

When an electrochromic mirror device was fabricated with this multilayer combination reflector/electrode, the device had a high end reflectance of 57.0 percent, a low end reflectance of 6.5 percent and changed from 57.0 percent to 10.0 percent reflectance in 2.0 seconds with the application of 1.2 volts.

### EXAMPLE 3

Other than as specifically mentioned, the conditions of Example 1 were used in this example. A multilayer combination reflector/electrode was prepared by sequentially depositing approximately 600 angstroms of chromium and approximately 300 angstroms of platinum. The base pressure of 2.1 x 10⁻⁶ torr and the argon pressure of 8 x 10⁻³ torr. The first surface reflectance was 73.8 percent and the sheet resistance was 3.2 ohms per square.

When an electrochromic mirror device was fabricated with this multilayer combination reflector/electrode, the device had a high end reflectance of 58.0 percent, a low end reflectance of 7.0 percent and changed from 58.0 percent to 10.0 percent reflectance in 2.7 seconds with the application of 1.2 volts.

### EXAMPLE 4

A multilayer combination reflector/electrode was prepared by the sequential deposition of approximately 600 angstroms of chromium and approximately 100 angstroms of 316 stainless steel on the 19 cm by 66 cm surface of a 0.2 cm thick sheet of flat soda lime float glass and on the convex side of a 22 cm diameter circle of glass which had been press bent to a uniform spherical curvature with a radius of curvature of 140 cm. The glass which was bent was TEK 20 tin oxide coated glass manufactured by Libbey Owens-Ford of Toledo, Ohio, and the tin oxide coating was on the concave side after the glass was bent. The deposition was accomplished in a large in-line sputtering system. The first surface reflectance from the multilayer combination reflector/electrode coatings was about 58 percent and the sheet resistance was about 7 ohms per square.

The fat and the bent glass sheets were cut into mirror shapes which were approximately 10 cm high and 16 cm wide. These were used as the rear elements of dimmable mirrors for the outside of an automobile as described below. As compared to glass coated only with chromium metal, these pieces of the multilayer combination reflector/electrode coated glass were dramatically easier to clean to a condition in which they behaved as uniform high quality electrodes without poorly coloring spots and blemishes in the final electrochromic dimmable minor devices.

The flat and convex pieces of multilayer combination reflector/electrode coated glass were matched with mirror-shaped pieces of TEK 20 coated pieces of flat and convex coated glass respectively. The front element convex mirror glass was also bent such that the tin oxide coating was on the concave side. Mirror devices were made by sealing nearly all the way around the perimeter of the glass pieces with an epoxy seal containing glass bead spacers which provided for a 0.015 cm spacing between the TEK 20 transparent, tin oxide electrode and the multilayer combination reflector/electrode. The spacing between the electrode surfaces was filled with a solution made up of:
0.028 molar 5,10-dihydro-5,10-dimethylphenazine
0.034 molar 1,1'-di(phenylpropyl)-4,4'-bipyridinium difluoroborate
0.030 molar 2-(2'-hydroxy-5'-methylphenyl)-benzotriazole
in a solution of 3 wt% Elvacite™ 2041 polymethylmethacrylate resin dissolved in propylene carbonate.

The small gap in the perimeter seal was plugged with a UV cure adhesive which was cured by exposure to UV light.

The high end reflectance of the mirrors was approximately 45 percent and the low end reflectance was approximately 7 percent. The mirrors changed reflectance from 45 percent to 15 percent reflectance in about 5 seconds and provided excellent glare relief when dimmed to the appropriate reflectance level during nighttime driving.

### EXAMPLE 5

Every aspect of Example 4 was repeated with the exception that the multilayer combination reflector/electrode was prepared by the sequential deposition of approximately 400 angstroms of chromium and approximately 200 angstroms of rhodium. The first surface reflectance from the multilayer combination reflector/electrode was about 70 percent and the sheet resistance was about 7 ohms per square.

The flat and convex dimmable minor devices prepared with this multilayer combination reflector/electrode according to the procedure of Example 4 had a high end reflectance of about 55 percent and a low end reflectance of about 7 percent with a speed of reflectance change similar to the mirrors of Example 4.

An automobile equipped with an automatic inside electrochromic mirror, one of the above flat mirrors as the driver's side outside mirror and one of the above convex mirrors as the passenger side outside mirror allowed the automobile operator to drive at night with essentially complete protection from glare from the headlamps of following vehicles.

It has been observed that chromium coatings alone can be difficult to clean during assembly of the entire mirror, resulting in a finished minor that may exhibit contamination spots and areas of slower darkening and clearing. The use of a high reflectance material, such as rhodium alone, can be very costly at thicknesses that provide low sheet resistance, but coated over the above-mentioned base coating(s) such as chromium results in a rear glass element which is easily cleaned prior to assembly, resulting in a finished mirror that is more optically perfect and free of contamination and darkening defects. Chromium or stainless steel alone also have the problem that the high end reflectance of the finished mirror is too low considering the attendant losses of light from the transparent coated front substrate and electrochromic media. A problem with stainless alone and to a lesser extent chromium alone is poor electrical contact stability to the conventional spring clip type buss bars or other electrical contact means.

The use of an inert high reflectance coating also makes attachment of spring clip type buss bars or other contact attachments more stable and trouble free, since non-conductive compounds and oxides do not form as readily under pressure contact areas. The result of low stability electrical contact is a mirror which loses its uniformity of coloration and its range and speed of coloration and clearing over the long life required in the motor vehicle industry.

There is thus provided a robust, low cost, dimmable rearview mirror for automotive vehicles, which mirror is capable of operating in harsh environments over wide variations in temperature, humidity, vibration, atmospheric corrosion, salt spray, electronic disturbances and sand and grit abrasion, and which mirror is resistant to damage from vehicle crashes and owner abuse. An additional benefit from sealing the main area of the mirror reflector inside the dimmable mirror element is long life of the reflector in the motor vehicle environment.

It is common with outside dimmable mirrors to adhere a resistance heater to the fourth surface reflective structure at the back of the rear glass substrate. This heater and its associated adhesive can cause incompatibility and field problems if conventional reflective material, such as silver, is on the back side of the back glass substrate. It is also common practice to adhesively bond the electrochromic mirror assembly to a plastic backing plate often called the glass case. Normal temperature variations experienced by this assembly can cause large forces to be exerted on a reflector structure on the back or fourth surface due to the thermal expansion mismatch of the materials involved. The adhesives used can also lead to chemical attack and degradation of the fourth surface reflector. Such problems are avoided when the reflector is located inside the device, and the heater is adhered directly to the glass (fourth surface) of the rear glass element or to the tin oxide coating such as TEK 20 or TEK 15 layer which may optionally be on the fourth surface.

Heretofore, problems have been encountered with a conventional silver reflector on the back surface of the rear glass, such problems being known as silver spoilage and silver lift, and are avoided with the multilayer combination reflector/ electrode inside the mirror element and protected by the rear glass. With the multilayer combination reflector/electrode located inside the mirror element, the environmental factors are limited to those that result from contact with the materials of the electrochromic media and the offset area where electrical contact is made, whereas with the reflector on the back of the rear glass surface, a number of other difficult environmental factors must be dealt with for the reflector to survive during the life of the mirror especially on the exterior of a motor vehicle.

Speed of coloring, good high end reflectance (typically greater than 50% for exterior mirrors and greater than 60% for interior mirrors) and low cost - important requirements for dimmable mirrors, and the above described construction provides a mirror meeting such requirements. Thus, it is possible to use comparatively low cost practical electrode coatings to make a surprisingly high performance mirror. Highly conducting transparent coatings are either nondurable, low in transmissivity and/or very high in cost. For this reason it is desirable to use comparatively low cost durable transparent coatings which have the inherent disadvantage that their conductance is lower than that of expensive coatings. Metals, on the other hand, have high conductance which can be used to great advantage. Electrochromic mirrors with reflector/electrodes involving a single metal layer on the front surface of the rear element have been previously described. However, the concept of creating a dimmable mirror where the electrical conductance of the transparent electrode at the second surface of the mirror element is purposely made much lower than the multilayer combination reflector/electrode conductance at the third surface of the mirror element is preferred. This intentional mismatch of conductance in a symbiotic relationship using practical low cost coatings provides a structure of significant commercial potential, i.e. the conductance of the transparent electrode is substantially lower than that of the multilayer combination reflector/electrode, and the multilayer combination reflector/electrode is comprised of two or more coatings. The first coating on the rear glass is preferably the low cost, high conductance base metal such as chromium. The final coating on the multilayer combination reflector/electrode is the thin, high reflectance metal such as rhodium for the purpose of providing high reflectance and high stability in use as an electrode for the electrochromic device. The coating(s) on the back surface of the front element may include one or more color suppression coatings followed by fluorine doped tin oxide, but it must be understood that any transparent coating having the required properties which is substantially lower in conductance than the coatings on the front surface of the rear element would be suitable. This concept may be incorporated in both inside and outside electrochromic mirrors which may incorporate ambient and glare light sensors, the glare light sensor being positioned either behind the mirror glass and looking through a section of the mirror with the reflective material removed, or partially removed, or the glare light sensor can be positioned outside the reflective surfaces. In the alternative, areas of the electrode and reflector, such as 45 and 46, respectively, may be removed, or partially removed in, for example, a dot pattern, to permit a vacuum fluorescent display, such as a compass or clock, to show through to the driver of the vehicle. Such concept is also applicable to a mirror which uses only one video chip light sensor to measure both glare and ambient light and which is further capable of determining the direction of glare. An automatic mirror on the inside of a vehicle can also control one or both outside mirrors as slaves in an automatic mirror system.

The foregoing also has application in the construction of elements for mirrors where high maximum reflectance is desired, and the electrochromic materials may be solution phase containing liquids, gels, rigid gels and/or polymers. It may also be a hybrid design where some or all of the electrochromic materials are not in solution and may be confined on the surfaces of the electrodes, and also particularly applies to electro-optic mirrors which draw more than 10 milliamps in operation at any point in their process of dimming.

The above described structure is particularly effective when used with selected low cost transparent coatings, as for example, "TEK 20", marketed by Libbey Owens-Ford Co. of Toledo, Ohio. The benefits over the most commonly used automatic mirrors in use today are as follows: mirrors embodying the multilayer combination reflector/electrode change reflectance faster, have a clearer image, have better coloration of image in the nondimmed state, eliminate the need and inconvenience of putting silver reflective coatings on the fourth surface of the mirror element, have fewer handling steps thereby creating fewer chances for scratching in the glass during processing and providing a final product with better optical quality, and having fewer surfaces through which the light must travel, and the first surface and third surface reflections are closer together with the result that there are less multiple images and less distortion in the mirror for the driver. Moreover, when used as an outside mirror, there are less reflections from raindrops and dust on the front surface of the front glass, and the reflector at the front surface of the rear glass element is protected from aging, exposure to airborne contaminants and physical abuse that often affect reflectors placed at the back surface of the rear glass element.

In the embodiment of the invention illustrated in Figures 1 through 6, the front glass element 14 of each outside mirror is formed in one continuous piece that includes an inboard main body portion 14B that may be substantially flat with an infinite radius of curvature, or slightly curved with a relatively large radius of curvature. This curvature is generally spherical with a radius of curvature in the range of 1200 to 3000 mm and more typically in the range of 1400 to 2600 mm. The main body portion 14B is integrally joined to an outboard aspherical portion 14A having a radius of curvature substantially less than the radius of curvature of the main body portion 14B. Thus, the aspherical portion 14A contributes a predetermined field of view which, when combined with the field of view of the main body portion 14B, is substantially greater than the field of view of the main body portion 14B alone. The rear glass element 18 of each outside mirror of this embodiment of the invention is substantially the same size as the main body portion 14B of the front glass element so that the aspherical portion 14A projects laterally outwardly, i.e., outboard of both the main body portion 14B and the rear glass element 18. Since the aspheric portion 14A of the front glass element 18 projects outwardly beyond the adjacent edge of the rear glass element 18, the aspheric portion 14A of the front glass element does not dim when the electro-optic inboard portion 14B of the mirror dims. It should also be understood that a bezel structure 34, shown in dashed lines for clarity of illustration, is preferably utilized which extends around the entire periphery of the front glass element and conceals the peripheral edge portions thereof.

In this embodiment of the invention, the rear surface 36 of the front glass element 14 of each outside mirror is preferably coated with a reflective layer 38 only in the area of the outboard aspherical portion 14A. This reflective material also preferably covers the outboard section 40 of the seal 16 so that the outboard section 40 of the seal 16 is not visible to the driver of the vehicle, although, if desired, a portion of the seal may be purposely allowed to be visible to the driver to provide a demarcation to apprise the driver that there is a difference in the minor configuration. As previously mentioned, the outboard area 14A of each outside mirror can be either aspheric, cylindrical, spherical, formed with multiple radii of curvature formed of any combination of the preceding, or be of other desired configuration. It should also be understood that the reflective layer could be on the front surface of the aspherical portion 14A.

The above described construction overcomes serious cost and technical problems which are encountered when efforts are made to perfectly match two glass shapes of complex curvature. Since the rear glass element 18 and the electro-optic portion 14B of the front glass element 14 are either flat or only slightly curved, matching of the overlying portions thereof is more readily achieved, and serious mismatching, which can cause double imaging, is obviated or at least minimized. Moreover, since the aspheric portion 14A of the front element 14 projects outwardly beyond the outboard edge of the rear glass element 18, no matching whatsoever is required because there is only one layer of glass in the aspherical portion 14A of each outside mirror.

It will be understood that if a reflective layer 38, such as chromium or rhodium, is deposited on the rear surface 36 in the aspherical portion 14A of the front glass element 14, and a reflective layer such as 22 is also used as a reflector on the inner surface of the rear glass element 18, behind the electro-optic material 24, then there will be a minimum discontinuity in the reflected image since the electro-optic media layer is very thin (typically 150 microns or less). In that connection it should be understood that light from reflection in the clear state of the electrochromic portion of the device may 10-20% less than the first surface reflectance of the layer 22 when measured with the layer 22 in contact with air.

It should also be understood that, by way of example, it is also possible to utilize indium tin oxide (ITO) as the transparent conductors on the confronting surfaces of the front and rear glass elements and a reflective layer such as silver on the back of the rear glass element. For matching purposes, it is also possible to provide a silver reflector on the back surface of the aspherical portion 14A of the front glass. In the preferred embodiment of the invention, a layer of chromium or a layer of rhodium makes up the reflective layer 38 provided on the back surface 36 of the aspherical portion 14A of the front glass element, limited to the aspheric area as illustrated in the drawings. For example, a rhodium layer 22 can be used on the front surface of the back glass element 18, deposited over a thick highly conductive chromium layer 20. By way of example, the rhodium layer may have a thickness of about 100-700 Angstroms, while the chromium layer may have a thickness of about 300 to 1500 Angstroms. In the alternative, instead of a dual layer of rhodium and chromium, a single layer of chromium may be utilized together with a single layer of chromium on surface 38. A single layer of smooth, high transmission ITO is preferred for application to the surface 36 in both areas 14A and 14B to simplify the ITO coating process and to maximize reflection of 38 and minimize haze of reflector 38. When the reflector of the outboard portion is placed on the front side of element 14 then the smoothness of the transparent conductor 36 is not critical, and it is possible to use the low cost but somewhat rough or hazy coating sold by Libbey Owens-Ford as "TEK 20" tin oxide coated glass or the Libbey Owens-Ford "TEK 15" glass or a similar type low cost tin oxide coated glass, or it is possible to remove the tin oxide transparent conductive layer prior to applying the reflector to the area 14A. Thus, if desired, the transparent conductive coating 26 on the front element 14 may be uniformly applied, selectively applied or removed from a portion of surface 36 prior to the application of the reflective layer 38 so that in the latter case the reflective layer 38 is applied directly onto the rear surface 36 of element 14. This latter configuration of the front element reflector is especially desirable if the transparent conductive coating has significant haze. It may also be desirable to lower the reflectivity at the area 14A to a value as bright as, or lower than, the reflectance range of the dimming portion by choice of reflector material or transmission properties of the layer 26, if present, in the area 14A.

From the foregoing description, it will be understood that much of the uniqueness of this embodiment of the invention resides in the fact that only the inboard main body portion 14B of the front element 14 will be dimmed utilizing electro-optic principles. This permits protection from glare and yet preserves safety, since the aspheric portion 14A is not allowed to dim and the driver can still see nearby vehicles in adjacent lanes. Moreover, the unitary front face of the front glass element 14 can still be easily cleaned and scraped of ice in the winter. In addition, the one-piece face of the front glass element is cosmetically stylish. Also, the layers of reflective material can be made so close to the same plane that their discontinuity will not be objectionable to the driver of the vehicle. It should also be understood that for defrosting purposes, a conventional heater (not shown) can be utilized to cover either the entire back of each outside mirror assembly including both the aspherical outboard portion and the automatically dimming inboard portion of the mirror, or only the automatic dimming portion with the heat eventually spreading through thermal conduction to the outboard portion 14A.

From the foregoing description, it will be appreciated that the aspheric outboard portion of the mirror provides a greatly increased field of view, thereby virtually eliminating blind spots, and mirrors embodying the present invention can replace conventional driver's side exterior mirrors or both the driver's side and the passenger's side exterior mirrors. The outside mirrors embodying the present invention combine two types of curvature, i.e., a convex main area with a large radius of curvature or a flat main area with an infinite radius of curvature, the latter being similar to conventional United States driver side exterior mirrors, together with an aspheric section on the outboard portion of the mirror. The relatively high curvature in the aspheric area yields a greatly expanded field of view, and at the same time, since the aspheric portion does not dim, the bright outboard portion provides a danger signal in the event another vehicle is positioned immediately adjacent to the vehicle quips with mirrors embodying the present invention. It should also be understood that if desired, the aspheric portion of the mirror assembly could be tinted or provided with less reflective capability than the undimmed electro-optic portion of the mirror.

With reference to FIG. 6, a preferred arrangement for connecting the electronic conductive layers to a power source is illustrated. In this arrangement, the two electrode-bearing front and rear glass elements 14 and 18 are displaced in opposite directions, laterally from, but parallel to, the chamber 13 in order to provide exposed areas on the front and rear glass elements. Electrically conductive spring clips 42 and 44 are provided which are placed on the coated glass sheets to make electrical contact with the exposed areas of the electrically conductive layers. Suitable electrical conductors (not shown) may be soldered or otherwise connected to the spring clips 42 and 44 so that desired voltage may be applied to the device from a suitable power source. It is preferred but not essential that the combination reflector/electrode, which may or may not be multilayer, function as and be maintained as the cathode in the circuitry.

Rearview mirrors embodying the present invention preferably include a bezel 34 which extends around the entire periphery of the assembly. The bezel 34 conceals and protects the spring clips 42 and 44 and the peripheral edge portions of both of the front and the rear elements 14 and 18. By way of example, the bezel 34 may be of the type disclosed in the co-pending Continuation Application of William L. Tonar, Serial No. 08/142,875, filed October 29, 1993, which issued as US-5,448,397 on 5th September 1995.

The assembly may also include a conventional heater and a plastic mirror back or glass case which is adapted to snap into an outside mirror housing (not shown) that may be of any desired configuration including with and without a motor pack for remote adjustment of mirror position. The outside mirror housing is supported on the outside of an automotive vehicle in any desired or conventional manner, and the inside mirror is supported inside the vehicle in any desired or conventional manner, whereby the field of view of each mirror may be adjusted by the driver of the vehicle in a conventional manner, as for example, through manual adjustment or by mechanical or electrical means of the types conventionally provided on modem day automobiles.

Another embodiment of the invention is illustrated in Figure 7 which enables each outside mirror to implement a signaling function, and in which the reflector on the outboard section 14A is constructed to reflect most of the spectra while transmitting only a selected spectra of a cooperative signal light source located behind the mirror. In an alternate approach, the reflector can be made generally reflective, but partially light transmissive over a broad spectral range, thus requiring a signal light of sufficient intensity to be seen by passing vehicles after attenuation through the partially reflecting layer. In order to direct the light away from the driver's eyes either louvers or a sheet of plastic light directing film is placed behind the mirror surface between the signal light source and the reflector. The ambient light sensor in the automatic interior mirror can be used along with a conventional control circuit (not shown) to progressively reduce the signal light output under progressively darker night driving conditions. Areas behind the outboard portion of each outside mirror where the signal light is not expected to shine through can optionally be covered with black or dark paint to make the interior behind the mirror reflector less visible cosmetically in the daytime. In this embodiment of the invention, a dichroic reflector in area 14A may be utilized, along with a light source that is compatible with the dichroic reflector, e.g., a red light emitting diode, emitting in specific spectral wavelengths of the band pass region of the dichroic reflector. Another possibility for a light source for use with a dichroic reflector is a neon gas tube, power supplies (not shown) for the light emitting diodes or neon tube being well known in the art.

With a partially reflecting mirror, any wide band light source is acceptable provided it has sufficient light output and life to withstand the automotive environment, and provided the color is acceptable for an automotive safety signal. Where a white or broad spectrum light source is preferably used, either a tinted lamp enclosure or separate colored filter between the light source and the reflector is sufficient to provide the proper orange or red light output. The preferred color of the light output with the partial reflector approach is orange. The most practical low cost light source is of the incandescent type with possible variations to include halogen, xenon or other life-extending, high efficiency technology. It is desired to produce the most light with the least cost using a practical, affordable light source for which replacement bulbs are readily available for service.

Whatever light source is used, it is preferred to use either a lamp reflector, lens or both for the purpose of increasing light output efficiency in the desired direction. The lamp reflector referred to in this case is distinctively separate from the mirror reflector on the outboard portion of the partially dimming aspheric mirror. As an alternate approach, this signal light concept and partial dimming concept can also be useful with a substantially uniformly curved mirror, such as a convex mirror, where only a portion of the mirror is automatically dimming and the outboard portion is non-dimming with a signal light feature behind the outboard reflector.

In order to direct light, emitting from the signal light source, away from the driver's view, a laser can be used to cut (burn) a precise controllable louver pattern in a plastic louver member effective to direct light out of the mirror so it can be seen by other vehicles on the side of the vehicle equipped with the signaling mirror, but not seen by the driver of the vehicle so equipped. The plastic louver sheet can be either extruded flat or molded flat or it can be molded in a curved shape to fit the mirror curve.

It will be understood that a laser or other suitable means can be utilized to burn slots at an angle through the plastic sheet, and that the slots can be arranged in a manner to provide the greatest practical ratio of open area with the laser cut slots being stopped at certain points to allow sufficient structural retention and support. Referring to Figure 7, a schematic simplified side elevational view of this embodiment of the invention is illustrated therein. In this embodiment of the invention, a front reflector 138 is provided on the aspherical portion 114A of the glass 114, the reflector 138 preferably being a very highly reflective but partially transparent metal coating.

It should be understood, however, that in this embodiment of the invention it is not necessary that the outboard portion of the mirror be aspheric, and that if desired the outboard portion can be flat or curved. If desired, protective coatings may also be provided upon the condition that the reflective coating be substantially transmissive thereby allowing light from behind the mirror to pass through. The higher the natural reflectance of the front layers the greater will be the ability to sacrifice reflectance to transmittance and still fall within an acceptable mirror reflectance range of about 40% to 60%. Suitable reflectors are rhodium, coated aluminum, coated silver, or other suitable different metal. The key aspect is that the natural reflectance be high enough to allow a thin controlled thickness to transmit approximately 10 to 30% or greater of the signal light and still allow approximately 40 to 60% reflectance. The glass itself is designated 114 in Figure 7, but clear plastic may be useful as an alternate.

The layer designated 115 is the louvered layer which incorporates an appropriate signal pattern which can be recognized as a turn or other signal, which when lighted is visible to vehicles on the side, but not to driver of the vehicle quipped with outside mirrors embodying the present invention.

In the embodiment of the invention illustrated in Figure 7, an optional lens 117 is provided to direct light for efficiency. A signal light source 119 is provided which may be in the form of an LED array, a filament lamp or lamps, or a gas filled lamp such as neon or xenon, and a reflector or reflector array 121 is provided to direct light emanating from the light source 119 toward the lens 117 and/or the louvers 115. If desired, a clear transparent electrode heater and black mask could be positioned between the louvers 115 and the glass 114. The louvers 115 would then be glued to the substrate with adhesive.

In the operation of this embodiment of the invention, when the signal light source is energized, the turn or other signal is thus visible only to the drivers of other vehicles. At the same time, the reflective surfaces of the mirror function in a conventional manner.

In accordance with the present invention, the signaling concept described hereinabove can be extended to include electro-optic dimming mirrors as shown in Figure 8. Referring to Figure 8, an electro-optic assembly generally designated 210 is provided which includes a sealed chamber 213 defined by a front glass element 214, an edge seal 216, and a rear glass element 218 having reflective but partially light transmitting and electrically conducting chromium and rhodium layers 220 and 222, respectively, on the front face thereof. An electro-optic medium 224 having the desired electro-optic properties fills the chamber 213, and a transparent electrically conductive layer or layers 226, such as ITO, is carried on the back face of the front glass 214. A louvered layer 215 is provided which is secured to the back surface of the rear glass 218, the louvered layer having an appropriate signal pattern, such as an arrow, which can be recognized as a turn or other signal, visible to vehicles on the side, but not to the driver of the vehicle equipped with outside mirrors embodying the invention. This embodiment of the invention includes an optional lens 217 to direct light for efficiency. A signal light source 219 is provided which may be in the form of an LED array, a filament lamp or lamps, or a gas-filled lamp such as a neon lamp or a xenon lamp, and a reflector or reflector array 221 is provided to direct light emanating from the light source 219 toward the lens 217 and/or the louvers 215. If desired, a clear transparent electrode heater can be positioned between the louvers 215 and the rear glass 218, the louvers being fixed to the heater substrate, as with an adhesive. Thus, in the operation of this embodiment or the invention, when the signal light source is energized, the signal is visible only to drivers of other vehicles, while the electro-optic dimming features of the mirrors are visible to the driver of the vehicle equipped with the mirrors embodying the invention.

Another embodiment of the invention is illustrated in Figure 9. In this embodiment of the invention, the rear glass element is substantially the same size as the front glass element including the aspherical portion thereof so that the entire mirror including the aspheric portion thereof has the reversibly variable transmittance capabilities. Referring to Figure 9, an outside mirror, generally designated 111, is illustrated which includes a sealed chamber 113 defined by a front glass element 114, an edge seal 116, and a rear glass element 118 having reflective and electrically conductive metal layer 122 and optionally also a metal under coating 120. An electro-optic medium 124 having the desired electro-optic properties fills the chamber 113, and a transparent electrically conductive layer, such as a fluorine-doped tin oxide conductive layer 126 is carried by the front element 114. The electrically conductive layers are connected to a electrical circuit in the manner previously described, and, if desired, a color suppression coating or coatings, such as 128 may be disposed between the conductive layer 126 and the adjacent rear surface of the front element 114.

In this embodiment of the invention, the front glass element 114 is formed in one continuous piece that includes an inboard main body portion 114B that may be substantially flat with an infinite radius of curvature, or slightly curved with a relatively large radius of curvature. The main body portion 114B is integrally joined to an outboard aspherical portion 114A having a radius of curvature substantially less than the radius of curvature of the main body portion 114B. Thus, the aspherical portion 114A contributes a predetermined field of view which, when combined with the field of view of the main body portion 114B is substantially greater than the field of view of the main body portion 114B alone. The rear glass element 118 of the mirror of this embodiment of the invention is substantially the same size as the front glass element 114 and includes a main body portion 118B that is substantially the same size as the main body portion 114B of the front glass element, and an aspherical portion 118A that is substantially the same size as the aspherical portion 114A of the front glass element.

In this embodiment of the invention the reflective surface on the inside of the rear glass 118 is comprised of a single metal layer combination reflector/electrode or a series of coatings which may be the same as the multilayer combination reflector/electrode types previously described which serve as a mirror reflective layer and also form an integral electrode in contact with the electrochromic media. The other electrode on the inside surface of the front glass 114 may be the same as the transparent electrode 26 previously described which contacts the electrochromic media inside the mirror element. The multilayer combination reflector/electrode in this embodiment of the invention thus functions in the same manner and obtains the same results as the multilayer combination reflector/electrode previously described, and the transparent electrode on the inside surface of the front glass 114 also functions in the manner and obtains the same results as the transparent electrodes previously described, the difference in this embodiment of the invention being that the multilayer combination reflector/electrode and the transparent electrode include the aspheric portion of the mirror, it being understood that the seal 116 encompasses the entire chamber 113 which extends to the left end of the mirror structure, as illustrated in Figure 9, including the aspheric portion of the mirror. Thus, the entire mirror 111 including the aspheric portion of the mirror has the reversibly variable transmittance capabilities, and the entire mirror functions in the same manner as the inboard main body portion 14B of the embodiment of the invention illustrated in Figures 1 through 6.

While preferred embodiments of the invention have been illustrated and described, it will be understood that various changes and modifications may be made without departing from the scope of the invention which is defined by the appended claims.

## Claims

1. An electro-optically dimming exterior rearview mirror (111) for automotive vehicles, said mirror comprising, in combination, front and rear spaced elements (114, 118), said front element (114) being optically transparent and including an inboard portion (140) and an outboard portion (114A) projecting laterally outwardly of said inboard portion, at least one of said inboard and outboard portions (114A, B) of said front element being of curved configuration, said front element and said rear element defining a chamber therebetween, the confronting sides of said front element and said rear element each including at least one layer of electrically conductive material (22, 26) said chamber containing an electro-optic reversibly variable transmittance medium (124) in contact with each of said electrically conductive layers, said rear element including light reflecting means (20, 22), said light reflecting means of said rear element being effective to reflect light through said medium and through said front element when said light reaches said rear element reflecting means after passing through said medium and through said front element, and means for applying electrical potential to said layers of electrically conductive material to cause variation in the light transmittance of said electro-optic medium.

2. A mirror according to claim 1, wherein said outboard portion of said front element is of aspheric configuration.

3. A mirror according to claim 1, wherein said inboard portion (114B) and said outboard portion (114A) of said front element have curved surfaces each with a radius of curvature, the radius of curvature of said curved surface of said inboard portion being greater than the radius of curvature of said curved surface of said outboard portion.

4. A mirror according to claim 1, 2 or 3, wherein said light reflecting means (20, 22) of said rear element is also electrically conductive and located on the side of said rear element (118) confronting said front element (114).

5. A mirror according to claim 4, wherein said light reflecting means of said rear element is formed of multiple layers of electrically conductive material.

6. A mirror according to claim 5, wherein said light reflecting means of said rear element includes a layer of rhodium and a layer of chromium, said layer of rhodium being on the side of said layer of chromium confronting said front element.

7. A combination as set forth in claim 6, wherein said layer of chromium is greater in thickness than said layer of rhodium.

8. An electro-optically dimming exterior rearview mirror (11, 12) for automotive vehicles, said mirror comprising, in combination, an optically transparent front element (14) having an inboard portion (14B) and an outboard portion (14A) projecting laterally outwardly from said inboard portion, a rear element (18), said rear element having a reflective surface (20, 22) thereon, said front clement (14) and said rear element (18) each having front and rear surfaces and defining a space between said rear surface of said front element and said front surface of said rear element, an electro-optic medium (24) confined in said space whereby light transmittance of said medium is variable upon the application of an electrical potential thereto, said front surface of said inboard portion (14B) of said front element having a predetermined radius of curvature, said front surface of said outboard portion (14A) of said front element being of aspheric configuration.

9. A mirror according to claim 8, wherein said front surface of said outboard portion (14B) of said front element has a radius of curvature less than said radius of curvature of said front surface of said inboard portion of said front element.

10. A mirror according to any of the preceding claims, wherein said inboard portion (14B; 114B) and said outboard portion (14A; 114A) of said front element each have a predetermined field of view, the field of view of the combination of said inboard portion and said outboard portion being greater than the field of view of said inboard portion alone.

11. A mirror according to any of the preceding claims, including means (28; 128) disposed between said front element (14; 114) and said rear element (18; 118) for suppressing colour.

12. A mirror according to any of the preceding claims, wherein said inboard portion (14B; 114B) and said outboard portion (14A; 114A) of said front element are formed of one continuous piece of glass.

13. A mirror according to any of the preceding claims, wherein said front element (14; 114) and said rear element (18; 118) have confronting surface portions of curved configuration.

14. A mirror according to any of claims 1 to 12, wherein said front element (14; 114) and said rear element (18; 118) have confronting surface portions of substantially flat configuration.

15. A mirror according to any of the preceding claims, wherein said reflective surface (20, 22; 120, 122) on said rear side of said rear element.

16. A mirror according to any of claims 1 to 14, wherein said reflective surface (20, 22; 120, 122) on said rear element (18; 118) is located on the side of said rear clement confronting said front element (14; 114).
